# FASCICULE DE BREVET EUROPEEN

(11) **EP 4 544 167 B1**
(45) Date de publication et mention de la délivrance du brevet: **11.02.2026**
(21) Numéro de dépôt: 23744522.6
(22) Date de dépôt: 20.06.2023
(51) Int. Cl.: F02K 1/72, F02K 1/54, F02K 1/62, F02K 1/60

(54) **INVERSEUR DE POUSSEE COMPRENANT AU MOINS UNE MEMBRANE DEPLOYABLE DE DEVIATION**
SCHUBUMKEHRVORRICHTUNG MIT MINDESTENS EINER AUSFAHRBAREN ABLENKMEMBRAN
THRUST REVERSER COMPRISING AT LEAST ONE DEPLOYABLE DEFLECTING MEMBRANE

(30) Priorité: 22.06.2022 FR 2206143
(43) Date de publication de la demande: 30.04.2025
(73) Titulaire: Safran Nacelles, 76700 Gonfreville-l'Orcher (FR)
(72) Inventeur: GONIDEC, Patrick, 77550 MOISSY-CRAMAYEL (FR); CHAPELAIN, Loïc, décédé (FR); BOILEAU, Patrick André, 77550 MOISSY-CRAMAYEL (FR)
(74) Mandataire: Santarelli
(86) Numéro de dépôt international: PCT/FR2023/050911
(87) Numéro de publication internationale: WO 2023/247883

(56) Documents cités:
- WO-A1-2020/229232
- FR-A1- 3 076 864
- FR-A1- 3 087 848

## Description

### Domaine technique

L'invention se rapporte au domaine des nacelles et des inverseurs de poussée pour ensemble propulsif d'aéronef, et, plus particulièrement, aux inverseurs de poussée équipés de membranes déployables.

### État de la technique antérieure

Les inverseurs de poussée sont des dispositifs permettant de dévier vers l'avant le flux d'air traversant l'ensemble propulsif, de manière à raccourcir les distances d'atterrissage, et à limiter la sollicitation des freins sur les atterrisseurs.

Les inverseurs à grilles actuellement exploités dans le secteur aéronautique comprennent des grilles de déviation intégrées à une structure fixe ou mobile de l'inverseur. La structure mobile de l'inverseur comporte un ou plusieurs capots mobiles d'inverseur, et elle est montée déplaçable en translation par rapport à la structure fixe entre une position avancée de poussée directe, et une position reculée d'inversion de poussée.

Dans la position reculée d'inversion de poussée, pour dévier au moins une partie du flux secondaire vers les grilles, l'inverseur est habituellement équipé de volets d'obturation, qui, lorsqu'ils sont déployés, obturent au moins partiellement la veine secondaire. De manière connue, cela force l'air du flux secondaire radialement vers l'extérieur, en direction des grilles, qui génèrent ensuite le flux d'air de contre-poussée vers l'avant.

Les volets sont généralement montés pivotants sur la paroi radialement interne des capots mobiles d'inverseur, cette paroi délimitant la veine secondaire radialement vers l'extérieur. Ainsi, des renfoncements sont prévus dans cette paroi radialement interne des capots d'inverseur afin de recevoir les volets d'obturation en position escamotée, telle qu'adoptée en jet direct. Néanmoins, en jet direct, la présence des renfoncements et des volets est source de perturbations aérodynamiques sur le flux secondaire. De plus, cette présence limite localement l'implantation d'un panneau acoustique sur la paroi radialement interne des capots d'inverseur.

Pour apporter une solution technique à ces problèmes, il a été proposé de remplacer les volets par une ou plusieurs membranes déployables d'obturation de la veine secondaire. Une telle conception est par exemple connue du document FR 3 076 864 A1.

Si la présence de membranes déployables d'obturation dans la veine secondaire permet de limiter la masse globale de l'inverseur, celle-ci reste impactée par la présence des grilles de déviation. Ces grilles incorporent en effet des ailettes / des aubes destinées à redresser le flux vers l'avant pour obtenir la fonction de contre-poussée. La hauteur radiale de ces ailettes de déviation étant limitée par la nécessité de loger les grilles de déviation à l'intérieur de l'inverseur en configuration de jet direct, il est parfois nécessaire d'augmenter la longueur axiale de ces grilles, afin de disposer du nombre suffisant d'ailettes nécessaires à l'obtention des performances requises de contre-poussée.

Cette augmentation de la longueur des grilles de déviation génère une augmentation de la longueur de plusieurs composants de l'inverseur, comme le / les capots mobiles d'inverseur, les actionneurs, etc. Cela conduit inévitablement à une masse plus importante de l'inverseur ainsi qu'à une plus grande trainée, synonymes d'augmentation de la consommation spécifique.

### Exposé de l'invention

Pour résoudre au moins partiellement les inconvénients mentionnés ci-dessus, relatifs aux réalisations de l'art antérieur, l'invention a tout d'abord pour objet un inverseur de poussée pour ensemble propulsif d'aéronef, l'inverseur comprenant une structure fixe équipée d'une paroi de délimitation radialement interne d'une veine secondaire de l'ensemble propulsif destinée à être traversée par un flux secondaire, l'inverseur comprenant également une structure mobile comprenant au moins un capot mobile d'inverseur équipé d'une paroi radialement interne de capot d'inverseur délimitant la veine secondaire radialement vers l'extérieur, la structure mobile étant déplaçable en translation par rapport à la structure fixe selon un axe central longitudinal de l'inverseur, entre une position avancée de poussée directe, et une position reculée d'inversion de poussée dans laquelle la structure mobile et la structure fixe définissent axialement entre elles, sur la veine secondaire, une ouverture d'extraction radiale d'au moins une partie du flux secondaire.

Selon l'invention, l'inverseur de poussée comprend également au moins une membrane déployable de déviation conçue pour dévier ladite au moins une partie du flux secondaire s'échappant de l'ouverture d'extraction radiale, lorsque cette membrane de déviation est dans une configuration déployée adoptée lorsque la structure mobile se trouve en position reculée d'inversion de poussée, et dans cette configuration déployée, ladite au moins une membrane de déviation s'étend radialement vers l'extérieur au-delà du capot mobile d'inverseur en position reculée d'inversion de poussée.

Ainsi, l'invention se révèle avantageuse en ce qu'elle remplace tout ou partie des grilles de déviation de l'inverseur par une ou plusieurs membranes de déviation, capables de se déployer pour assurer sa fonction de contre-poussée lorsque la structure mobile adopte sa position reculée d'inversion de poussée. Une telle membrane de déviation présente l'intérêt d'un encombrement faible en configuration non-déployée, adoptée lorsque la structure mobile se trouve en position avancée de poussée directe, tout en étant capable de s'étendre radialement vers l'extérieur de manière conséquente dans sa position déployée, pour l'obtention de performances satisfaisantes en matière de contre-poussée.

La solution proposée par l'invention permet de réduire la dimension axiale de l'inverseur, car la/les membranes proposées dévient le flux de préférence vers l'avant, en le canalisant vers une section d'éjection préférentiellement sensiblement perpendiculaire au plan de sortie des membranes. Ainsi, la surface débitante est toujours sensiblement égale à la section de sortie des membranes, alors que dans le cas des grilles conventionnelles, l'éjection s'effectue de manière oblique par rapport au plan externe de la grille. Dans ce cas des grilles, plus le jet est dévié vers l'avant, plus la surface débitante de la grille s'en trouve réduite. Aussi, pour l'obtention d'un débit compatible du moteur, il faut alors rallonger axialement les grilles, avec un impact conséquent sur l'encombrement général de l'inverseur.

Dans le cas d'une membrane, la géométrie de celle-ci oriente le flux, mais c'est sa section de sortie qui provoque le redressement du flux, tout en restant perpendiculaire à la vitesse de sortie de ce flux.

Avec la solution selon l'invention, il est ainsi possible d'incliner davantage le jet, et donc d'en augmenter les performances de contre-poussée, sans réduire la surface débitante. Par conséquent, la longueur de l'inverseur est conditionnée par la longueur des éventuelles grilles de déviation conservées, en fonction que celles-ci soient entièrement ou partiellement remplacées par des membranes conformes à l'invention.

Il en résulte un gain en termes de masse et de traînée, avec pour conséquence une amélioration de la consommation spécifique. Les coûts sont également réduits par la mise en œuvre de l'invention. En outre, la performance générale de l'ensemble propulsif est accrue, grâce à la plus grande liberté dans le choix des formes aérodynamiques de l'inverseur en jet direct, ces formes demeurant moins ou plus du tout conditionnées par la nécessité de loger les grilles de déviation dans l'inverseur en configuration de poussée de directe.

Il est noté qu'au sens de l'invention, ladite au moins une membrane déployable de déviation est une membrane de l'inverseur capable de générer un flux de sortie avec une composante axiale vers l'avant non-nulle, et/ou un flux de sortie circonférentiel avec une composante axiale nulle.

L'invention prévoit de préférence au moins l'une des caractéristiques techniques optionnelles suivantes, prises isolément ou en combinaison.

Selon un mode de réalisation préféré de l'invention, ladite au moins une membrane de déviation comporte une membrane de déviation aval dont une surface active de déviation concave présente un bord d'attaque situé préférentiellement au niveau d'une extrémité axiale arrière de l'ouverture d'extraction radiale, ladite surface active de déviation concave étant mise en pression par ladite au moins une partie du flux secondaire s'échappant de l'ouverture d'extraction radiale.

Selon un autre mode de réalisation préféré de l'invention, éventuellement combinable avec le précédent, ladite au moins une membrane de déviation comporte une membrane de déviation amont dont une surface active de déviation convexe présente un bord d'attaque situé préférentiellement au niveau d'une extrémité axiale avant de l'ouverture d'extraction radiale, ladite surface active de déviation convexe étant mise en dépression par ladite au moins une partie du flux secondaire s'échappant de l'ouverture d'extraction radiale.

De préférence, ladite membrane de déviation aval comporte, circonférentiellement de part et d'autre de sa surface active de déviation concave, respectivement deux flancs radiaux délimitant conjointement, avec la surface active de déviation concave, un canal de déviation vers l'avant de ladite au moins une partie du flux secondaire s'échappant de l'ouverture d'extraction radiale. En d'autres termes, la membrane de déviation aval prend alors la forme générale d'une « capuche ». Par exemple, ledit canal de déviation délimite, à l'aide de flancs radiaux intermédiaires, plusieurs compartiments de déviation séparés circonférentiellement les uns des autres. Alternativement, en l'absence de flancs radiaux intermédiaires, le canal de déviation reste unique, noncompartimenté.

De préférence, ladite membrane de déviation aval est fixée sur un cadre de support, de préférence de forme générale carrée ou rectangulaire, agencée dans l'ouverture d'extraction radiale.

De préférence, plusieurs membranes de déviation se succèdent circonférentiellement dans l'ouverture d'extraction radiale, éventuellement en combinaison avec des grilles de déviation également situées dans l'ouverture d'extraction radiale, entre les membranes de déviation.

De préférence, la membrane de déviation amont, dans sa configuration déployée, prolonge un bord de déviation rigide de la structure fixe, ou forme ce même bord de déviation.

De préférence, l'inverseur comprend également au moins une membrane déployable d'obturation qui, dans une configuration déployée dans la veine secondaire, est conçue pour dévier au moins une partie du flux secondaire vers l'ouverture d'extraction radiale lorsque la structure mobile se trouve en position reculée d'inversion de poussée. Alternativement, un système classique de volets obturateurs pourrait être mis en œuvre dans la veine secondaire, sans sortir du cadre de l'invention.

De préférence, dans les configurations déployées de la membrane de déviation aval et de la membrane d'obturation, un bord de fuite de la membrane d'obturation se trouve décalé axialement vers l'aval par rapport au bord d'attaque de la surface active de déviation concave de la membrane de déviation aval. Ce décalage axial permet un gain en performances de l'inverseur, puisqu'une partie du flux secondaire s'échappant par l'ouverture d'extraction radiale, au niveau d'une extrémité aval de celle-ci, va également générer une forte dépression sur la surface convexe de la membrane aval, opposée à la surface active de déviation concave de cette même membrane aval.

Alternativement, les deux membranes pourraient se situer dans la continuité ou sensiblement dans la continuité l'une de l'autre, voire ne former ensemble qu'une seule et unique membrane assurant les fonctions d'obturation en partie radialement intérieure, et de déviation en partie radialement extérieure.

De préférence, l'inverseur comprend une ou plusieurs membranes de déviation aval ainsi qu'une ou plusieurs membranes de déviation amont, délimitant ensemble un ou plusieurs cols d'extraction d'un flux de contre-poussée. Un tel col permet de former un guide sur 360° pour le flux de contre-poussée, limitant ainsi les éventuels obstacles susceptibles de générer de la trainée sur ce flux. Il en résulte un gain en termes de performances de l'inverseur.

De préférence, ladite au moins une membrane de déviation est montée sur la structure fixe de l'inverseur.

L'invention a également pour objet une nacelle pour ensemble propulsif d'aéronef, comprenant au moins un capot de soufflante, ainsi qu'un inverseur de poussée tel que décrit ci-dessus.

Enfin, l'invention a également pour objet un ensemble propulsif pour aéronef, comprenant une turbomachine et une telle nacelle.

D'autres avantages et caractéristiques de l'invention apparaîtront dans la description détaillée non limitative ci-dessous.

### Brève description des dessins

La description détaillée qui suit fait référence aux dessins annexés sur lesquels :
[Fig. 1] est une demi-vue schématique en coupe longitudinale d'un ensemble propulsif, comprenant un inverseur de poussée représenté en configuration de poussée directe ; [Fig. 2] est une vue en demi-coupe longitudinale de l'inverseur équipant l'ensemble propulsif montré sur la figure 1, avec l'inverseur se présentant sous la forme d'un premier mode de réalisation préféré de l'invention, et représenté en configuration de poussée directe ;
[Fig. 3] est une vue en demi-coupe longitudinale similaire à celle de la figure précédente, avec l'inverseur représenté dans une configuration intermédiaire entre la configuration de poussée directe, et la configuration d'inversion de poussée ;
[Fig. 4] est une vue en demi-coupe longitudinale similaire à celle de la figure précédente, avec l'inverseur représenté dans une configuration d'inversion de poussée ;
[Fig. 5] est une vue en perspective montrant la membrane de déviation de l'inverseur montré sur la figure précédente, dans une configuration déployée de la membrane ;
[Fig. 5A] est une vue en demi-coupe longitudinale montrant la continuité aérodynamique entre le bord de déviation de la structure fixe de l'inverseur, et le cadre de support de la membrane de déviation ;
[Fig. 6] est une vue en perspective similaire à celle de la figure précédente, avec la membrane de déviation représentée selon une alternative ;
[Fig. 7] est une vue partielle en perspective de l'inverseur selon une alternative, et représenté en configuration d'inversion de poussée ;
[Fig. 8] est une vue partielle en perspective similaire à celle de la figure précédente, selon un autre angle de vu ;
[Fig. 8A] est une vue partielle en demi-coupe longitudinale, montrant schématiquement les efforts de pression s'appliquant sur la membrane de déviation ;
[Fig. 9] est une vue partielle en perspective de l'inverseur selon une autre alternative, et représenté en configuration d'inversion de poussée ;
[Fig. 10] est une vue en perspective d'une partie de l'inverseur montré sur la figure précédente, selon encore une autre alternative ;
[Fig. 11] est une vue en demi-coupe longitudinale de l'inverseur selon un second mode de réalisation préféré de l'invention, représenté en configuration d'inversion de poussée ;
[Fig. 12] est une vue partielle en perspective de l'inverseur montré sur la figure précédente ;
[Fig. 13] est une vue de face montrant les cols d'extraction de flux délimités par les membranes de déviation amont et aval de l'inverseur montré sur les figures 11 et 12 ;
[Fig. 14] est une vue en demi-coupe longitudinale de l'inverseur selon un troisième mode de réalisation préféré de l'invention, représenté en configuration de poussée directe ;
[Fig. 15] est une vue en demi-coupe longitudinale similaire à celle de la figure précédente, avec l'inverseur représenté en configuration d'inversion de poussée ;
[Fig. 16] est une vue en coupe prise le long de la ligne XVI-XVI de la figure 15 ;
[Fig. 17] est une vue en demi-coupe longitudinale similaire à celle de la figure 14, avec l'inverseur représenté selon une alternative dans laquelle le bord de déviation souple est étanche et gonflable, de façon à être pressurisé par l'écoulement de la veine lors de l'ouverture afin de **lui** donner sa forme aérodynamique optimale lors du déploiement de l'inverseur ;
[Fig. 18] est une vue en demi-coupe longitudinale similaire à celle de la figure 11, avec l'inverseur représenté selon un quatrième mode de réalisation préféré de l'invention, en configuration d'inversion de poussée ;
[Fig. 19] est une vue en demi-coupe longitudinale similaire à celle de la figure précédente, avec l'inverseur représenté selon alternative ;
[Fig. 20] est une vue en demi-coupe longitudinale similaire à celle de la figure 18, avec l'inverseur représenté selon un cinquième mode de réalisation préféré de l'invention, en configuration d'inversion de poussée ;
[Fig. 21] est une vue en demi-coupe longitudinale similaire à celle de la figure 18, avec l'inverseur représenté selon un sixième mode de réalisation préféré de l'invention, en configuration d'inversion de poussée ;
[Fig. 22] est une vue en coupe prise le long de la ligne XXII-XXII de la figure 21 ;
[Fig. 23] est une vue en perspective de l'inverseur montré sur les figures 21 et 22, en configuration d'inversion de poussée ;
[Fig. 24] est une vue en demi-coupe longitudinale similaire à celle de la figure 19, avec l'inverseur représenté selon un septième mode de réalisation préféré de l'invention, en configuration d'inversion de poussée ; et
[Fig. 25] est une vue en demi-coupe longitudinale de l'inverseur permettant la comparaison des performances entre la solution conventionnelle à grilles d'aubes, et la solution à membranes de déviation selon l'invention.

### Description des modes de réalisation

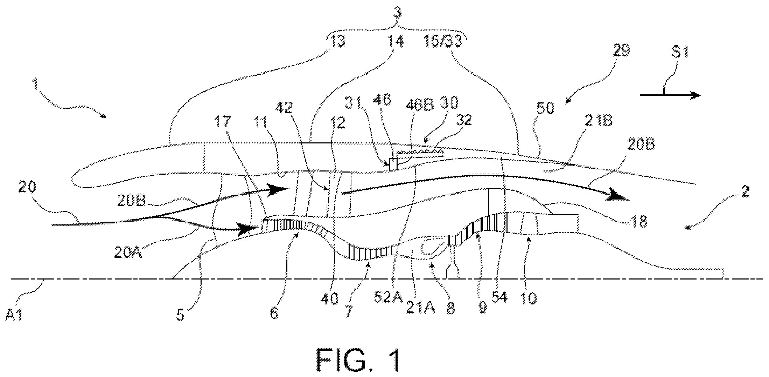

Il est représenté sur la figure 1 un ensemble propulsif 1 d'aéronef, présentant un axe central longitudinal A1.

Par la suite, les termes « amont » et « aval » sont définis relativement à un sens général S1 d'écoulement des gaz à travers l'ensemble propulsif 1, le long de l'axe A1 lorsque celui-ci génère une poussée directe. Ces termes « amont » et « aval » pourraient respectivement être substitués par les termes « avant » et « arrière », avec la même signification.

L'ensemble propulsif 1 comprend une turbomachine 2, une nacelle 3 ainsi qu'un mât (non représenté), destiné à relier l'ensemble propulsif 1 à une aile (non représentée) de l'aéronef.

La turbomachine 2 est dans cet exemple un turboréacteur à double flux et à double corps comprenant, de l'avant vers l'arrière, une soufflante 5, un compresseur basse pression 6, un compresseur haute pression 7, une chambre de combustion 8, une turbine haute pression 9 et une turbine basse pression 10. Les compresseurs 6 et 7, la chambre de combustion 8 et les turbines 9 et 10 forment un générateur de gaz. Le turboréacteur 2 est doté d'un carter de soufflante 11 relié au générateur de gaz par des bras structuraux 12.

La nacelle 3 comprend une section avant formant une entrée d'air 13, une section médiane qui comporte deux capots de soufflante 14 enveloppant le carter de soufflante 11, et une section arrière 15.

En fonctionnement, un écoulement d'air 20 pénètre dans l'ensemble propulsif 1 par l'entrée d'air 13, traverse la soufflante 5 puis se divise en un flux primaire 20A et un flux secondaire 20B. Le flux primaire 20A s'écoule dans une veine primaire 21A de circulation de gaz traversant le générateur de gaz. Le flux secondaire 20B s'écoule dans une veine secondaire 21B entourant le générateur de gaz. La veine secondaire 21B est délimitée radialement vers l'intérieur par un carénage interne fixe qui enveloppe le générateur de gaz. Dans cet exemple, le carénage interne fixe comprend un premier tronçon 17 appartenant à la section médiane 14, et un deuxième tronçon 18 s'étendant vers l'arrière à partir du premier tronçon 17, de manière à former une partie de la section arrière 15. Ce second tronçon 18 fait partie intégrante d'une structure fixe d'un inverseur de poussée qui sera décrit ci-après. Ce même tronçon sera par la suite dénommé paroi 18 de délimitation radialement interne de la veine secondaire 21B.

Radialement vers l'extérieur, la veine secondaire 21B est délimitée par le carter de soufflante 11, et, dans la configuration de la figure 1, par un ou plusieurs capots mobiles d'inverseur 33 formant une partie de la section arrière 15 de la nacelle 3, et qui seront décrits ultérieurement. Plus précisément, entre le carter de soufflante 11 et les capots d'inverseur 33, il est prévu une virole extérieure 40 d'un carter intermédiaire 42, ce dernier comprenant les bras structuraux 12 précités, dont l'extrémité radialement externe est fixée sur cette virole 40. Celle-ci participe donc également à délimiter la veine secondaire 21B radialement vers l'extérieur, en étant située dans le prolongement axial aval du carter de soufflante 11.

La nacelle 3 comporte donc un inverseur de poussée 30 (représenté que schématiquement et partiellement sur la figure 1), centré sur l'axe A1 et comprenant d'une part une structure fixe 31 solidaire du carter de soufflante 11, et d'autre part une structure 29 mobile par rapport à la structure fixe 31. La structure fixe 31 comporte par exemple un cadre avant 46 qui la raccorde fixement au carter de soufflante 11, de préférence via un assemblage en bride couteau situé en aval de la virole extérieure 11. Ce cadre avant 46 contient une partie aérodynamique profilée appelée bord de déviation 46B, qui guide l'écoulement en jet inversé.

Dans ce mode de réalisation préféré, la structure fixe 31 comporte aussi une ou plusieurs membranes déployables de déviation 32, dont l'une est représentée schématiquement dans une configuration non-déployée sur la figure 1.

Par ailleurs, la structure mobile 29 comprend quant à elle les capots mobiles d'inverseur 33 précités, par exemple deux capots 33 s'étendant chacun sur une amplitude angulaire d'environ 180°. Cette configuration à deux capots 33 est particulièrement bien adaptée dans le cas d'une conception de nacelle dans laquelle les capots/parois 18 sont également montés articulés, l'inverseur 30 présentant alors une architecture dite « en D », connue sous l'appellation anglo-saxonne « D-Duct ». Dans cette architecture, les capots 18, 33 sont reliés de manière à s'ouvrir / se fermer simultanément lors des opérations de maintenance sur le moteur. Néanmoins, d'autres architectures sont possibles, comme par exemple une architecture dite « en C », connue sous l'appellation anglo-saxonne « C-Duct », ou encore une architecture dite « en O », connue sous l'appellation anglo-saxonne « O-Duct ».

Chaque capot d'inverseur 33 comporte une paroi radialement externe 50 formant une surface aérodynamique externe de nacelle, ainsi qu'une paroi radialement interne 52 participant à la délimitation de la veine secondaire 21B radialement vers l'extérieur. Cette paroi 52 se situe dans la continuité aval du bord de déviation 46B, en configuration de poussée directe. Les deux parois 50, 52 définissent un logement 54 ouvert axialement à l'extrémité amont du capot d'inverseur 33, et dans lequel se trouve au moins une partie des membranes de déviation 32 en configuration de poussée directe.

La figure 1 montre l'inverseur 30 dans une configuration de poussée vers l'avant, dite de « jet direct », correspondant à une configuration standard de vol. Dans cette configuration, les capots 33 de la structure mobile 29 sont dans une position de fermeture, dite position avancée de poussée ou de « jet direct », dans laquelle ces capots d'inverseur 33 sont en appui sur la structure fixe 31, en particulier sur le bord de déviation 46B faisant partie intégrante de cette dernière. En effet, dans la configuration de poussée directe, l'extrémité amont 52A de la paroi radialement interne 52 de chaque capot 33 est en appui axial contre le bord de déviation 46B.

La structure mobile 29 est ainsi déplaçable en translation par rapport à la structure fixe 31 selon l'axe A1 de l'inverseur, entre la position avancée de poussée directe montrée sur la figure 1, et une position reculée d'inversion de poussée qui sera décrite ultérieurement. Dans la position avancée de poussée directe de la structure mobile 29, la / les membranes de déviation 32 en configuration repliée / non-déployée sont agencées dans le logement 54 des capots d'inverseur 33, en étant isolées de la veine secondaire 21B par la paroi radialement interne 52 de ces capots coulissants 33. Cette paroi 52, formant la paroi externe de la veine secondaire, est également appelée panneau interne acoustique.

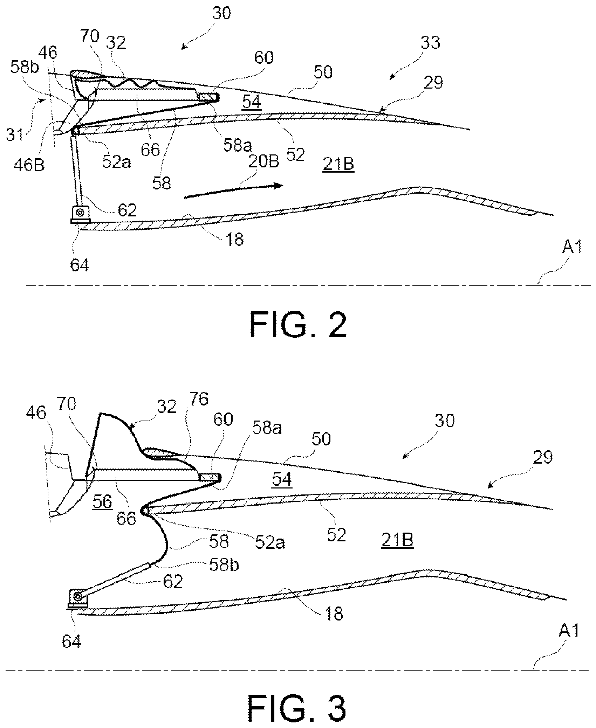

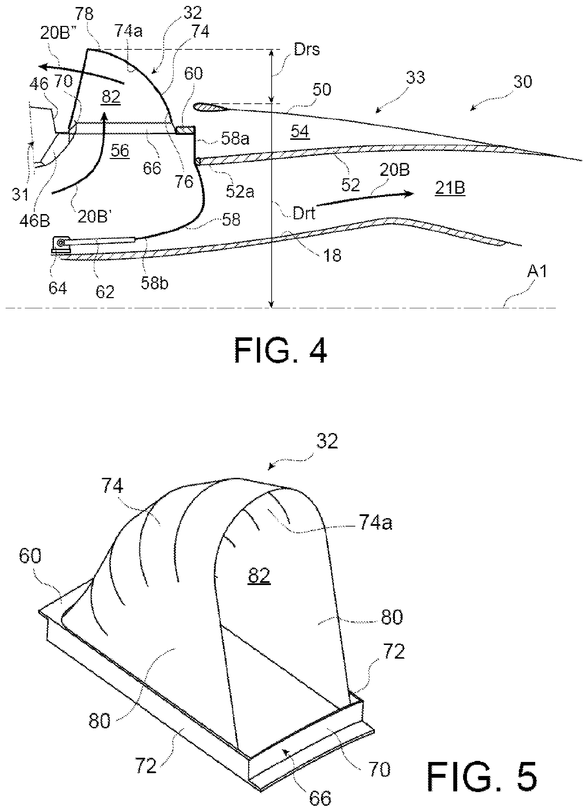

La configuration de poussée directe est également représentée sur la figure 2, tandis que la position reculée d'inversion de poussée de la structure mobile 29 est représentée sur la figure 4. La figure 3 représente l'inverseur dans une position intermédiaire entre les positions des figures 2 et 4. L'ensemble des figures 1 à 5 montrent un premier mode de réalisation préféré de la présente invention.

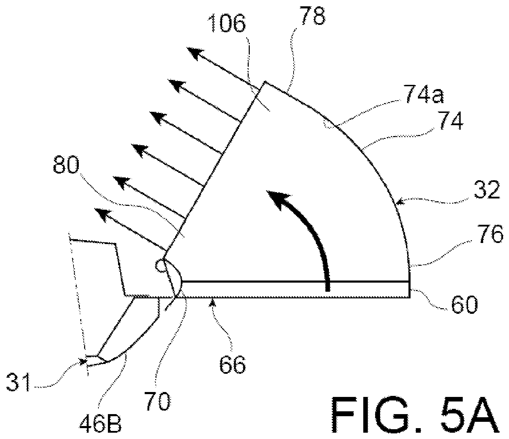

Sur la figure 4, il est montré que le bord de déviation 46B et l'extrémité amont du capot mobile 33 délimitent axialement entre eux, sur la veine secondaire 21B, une ouverture d'extraction radiale 56 d'au moins une partie 20B' du flux secondaire 20B. Cette ouverture 56 de la veine secondaire 21B est donc délimitée vers l'amont par le bord de déviation 46B, qui, de manière classique, s'évase radialement vers l'extérieur en allant vers l'arrière, pour délimiter un écoulement d'air 20B' destiné à traverser cette ouverture 56 lorsque le système mobile se trouve dans cette position reculée d'inversion de poussée. En d'autres termes, le bord de déviation 46B, ici réalisé de manière rigide, s'éloigne progressivement de l'axe A1 en allant de l'avant vers l'arrière, pour guider / dévier l'air à travers l'ouverture 56 et vers la membrane déployable de déviation 32, en configuration d'inversion de poussée. A l'opposé, cette ouverture 56 de la veine secondaire 21B est notamment délimitée vers l'aval par l'extrémité amont 52A de la partie radialement interne 52 du capot 33, mais aussi par l'extrémité amont de la paroi radialement externe 50 de ce même capot. Comme cela sera décrit ultérieurement, la figure 5A montre plus en détail le rôle de l'extension solide du bord de déviation inclue dans la structure solide portant la membrane 32, et son interaction avec la géométrie de cette dernière afin d'obtenir l'écoulement le plus homogène possible en sortie d'inverseur.

Afin de forcer au moins une partie 20B' du flux secondaire 20B vers l'ouverture 56, l'inverseur 30 comporte une ou plusieurs membranes d'obturation 58. Par la suite, il sera décrit une seule membrane 58, dont l'ensemble présente par exemple une amplitude angulaire identique ou similaire à celle de l'ensemble des membranes de déviation 32 qui sera décrite ultérieurement, et qui se trouve dans un même plan axial et radial de l'ensemble propulsif. Ainsi, il peut donc être prévu plusieurs membranes 58 circonférentiellement adjacentes au sein de la veine secondaire 21B. Néanmoins, l'étendue angulaire de la membrane d'obturation 58 peut être supérieure à celle de la membrane de déviation 32, sans sortir du cadre de l'invention.

La membrane 58 peut être réalisée dans un matériau connu de l'homme du métier pour ce type d'application. Par exemple, il peut s'agir d'un tissu non imprégné, par exemple de fibres d'aramide. La membrane 58 peut également être réalisée à l'aide d'un matériau composite dont la matrice est particulièrement souple, par exemple en polyuréthane aliphatique, ce qui permet l'utilisation dans des conditions de températures différentes, notamment des températures plus faibles dans le cas d'une membrane en polyuréthane aliphatique que dans le cas d'une membrane en silicone. La matrice donne une faible capacité de reprise en flexion et le comportement de la structure obtenue est bien celui d'une membrane. L'une des propriétés majeures de cette membrane d'obturation 58 est de pouvoir se plier de manière parfaitement réversible (élastique ou par glissement de fibres) avec un rayon de courbure très faible par rapport à sa surface, et d'avoir une épaisseur très faible, par exemple de l'ordre de 0,1 à 3 mm. A titre informatif, il est observé que cette membrane 58 se comporte comme une voile de bateau ou un parachute / une aile volante quand elle est mise sous pression.

Une première extrémité 58a de la membrane d'obturation 58 est fixée à une armature arrière 60 appartenant à la structure fixe 31, cette armature se situant dans ou à proximité d'une extrémité axiale arrière de l'ouverture 56. En outre, une seconde extrémité 58b de la membrane d'obturation 58, opposée à la première extrémité de membrane 58a, est fixée sur la paroi 18. Il est noté que la première extrémité 58a peut être fixée à l'arrière de l'armature arrière 60 comme montré sur les figures, ou bien à l'avant de cette même armature.

Pour ce faire, il peut être utilisé des bielles 62 dont une première extrémité de chacune d'elles est montée sur la paroi 18, de préférence par l'intermédiaire d'une liaison pivot ou rotule 64. Cette liaison 64 peut être réalisée à l'aide d'une ferrure fixée sur la paroi fixe 18 et coopérant avec la première extrémité de bielle 62a.

Les bielles 62 sont espacées circonférentiellement les unes des autres au sein de la veine secondaire 21B, et leur nombre peut varier.

Chaque bielle 62 est conçue pour se déplacer d'une position en saillie radialement dans la veine secondaire 21B, position montrée sur la figure 2 et adoptée lorsque la structure mobile 29 occupe sa position avancée de poussée directe, à une position rabattue vers l'aval, montrée sur la figure 4 et adoptée lorsque la structure mobile 29 occupe sa position reculée d'inversion de poussée. Dans la position en saillie, chaque bielle 62 peut adopter une orientation radiale ou sensiblement radiale en rapport à l'axe A1, tandis que dans la position rabattue, chaque bielle peut adopter une orientation axiale ou sensiblement axiale.

Des moyens élastiques, dits moyens élastiques de rappel (non représentés), tendent à incliner chaque bielle 62 vers sa position rabattue / couchée de la figure 4, en particulier quand la bielle est dans sa position en saillie correspondant à la position de vol de l'inverseur. Ainsi, en début de déploiement de l'inverseur, chaque bielle 62 exerce sur la membrane 58 une poussée vers l'arrière et vers le bas qui la tire dans la veine de façon à ce que l'écoulement qui s'engouffre dans le logement 54 en début de transit ne vienne pas coincer la membrane dans ce logement 54 de capot de soufflante 33.

La seconde extrémité de chaque bielle 62, opposée à la première extrémité, peut être raccordée directement sur la seconde extrémité 58b de la membrane 58. Néanmoins, d'autres solutions préférentielles sont retenues, comme celles visant à intégrer des câbles et/ou des sangles de renforts au sein des moyens d'accrochage de la membrane 58 sur ses éléments associés 18, 60.

Il est noté que les bielles 62 sont axialement positionnées pour que la trajectoire de leur seconde extrémité soit tangente ou sensiblement tangente à la surface intérieure du panneau acoustique 52 dans sa partie avant, ou pour que la trajectoire soit descendante dans la veine.

Comme cela est visible sur la figure 2, lorsque la structure mobile 29 occupe sa position avancée de poussée directe, au moins une partie de la membrane d'obturation 58 se trouve agencée radialement vers l'extérieur par rapport à la paroi radialement interne 52 du capot d'inverseur 33, dans le logement 54. De ce fait, lorsque la structure mobile 29 adopte sa position avancée de poussée directe, la seconde extrémité 58b de la membrane d'obturation 58 est pincée entre l'extrémité amont 52A de la paroi 52, et le bord de déviation 46B. Afin d'éviter d'éventuelles dégradations de la membrane 58 du fait de ce pincement, le bord de déviation 46B peut localement présenter une échancrure de forme adaptée pour recevoir l'extrémité amont 52A de la paroi 52. Ainsi, la membrane 58 se trouve également plaquée dans cette échancrure du bord de déviation 46B, par l'appui de l'extrémité amont de la paroi 52.

Comme cela est visible sur les figures 3 et 4, lorsque la structure mobile 29 se déplace et qu'elle occupe sa position reculée d'inversion de poussée à la fin de ce déplacement, la membrane d'obturation 58 se trouve en partie en appui contre l'extrémité amont 52A de la paroi radialement interne 52 du capot d'inverseur, correspondant donc au panneau acoustique. Plus précisément, au cours du déplacement vers l'arrière de la structure mobile 29, la membrane 58 glisse sur cette l'extrémité amont 52A de la paroi radialement interne 52.

En position reculée d'inversion de poussée de la figure 4, la membrane 58 est donc en appui axial vers l'aval contre l'extrémité amont 52A. Il est à noter que selon l'étendue de la course axiale de l'inverseur, la membrane 58 peut ne plus être en contact avec le panneau interne acoustique 52 dans la position totalement déployée de l'inverseur, où le capot 33 est dans sa position la plus reculée. L'option avec contact correspond à une course minimisée de l'inverseur, tandis que l'option sans contact correspond en général à une forme de membrane plus lisse en jet inversé, donc plus performante d'un point de vue aérodynamique.

Ainsi, la partie de la membrane 58 qui se situe radialement vers l'extérieur par rapport à sa zone d'appui sur la paroi 52 obture une partie de l'ouverture axiale amont du logement 54, tandis que l'autre partie située radialement vers l'intérieur obture au moins une partie de la veine secondaire 21B, déviant de la sorte au moins une partie 20B' du flux secondaire 20B vers l'ouverture 56 en direction de la membrane déployable de déviation 32, spécifique à la présente invention. Le matériau utilisé pour réaliser la membrane 32 est l'un quelconque parmi ceux déjà mentionnés ci-dessus pour la réalisation de la membrane d'obturation 58.

Dans ce premier mode de réalisation préféré, la membrane 32 correspond à une membrane de déviation aval qui est fixée sur un cadre de support 66, de préférence de forme générale carrée ou rectangulaire, et agencé axialement dans l'ouverture d'extraction radiale 56. A titre indicatif, il est noté que les deux coins arrière du cadre 66 sont préférentiellement arrondis.

Ce cadre 66 est le mieux visible sur la figure 5. Il comprend l'armature arrière précitée 60, une armature avant 70, et deux montants axiaux 72 reliant les deux armatures. Comme visible sur la figure 4, la longueur axiale du cadre de support 66 est identique ou sensiblement identique à la longueur axiale de l'ouverture 56.

Plus précisément, la membrane de déviation aval 32 comporte une portion principale de déviation 74, dont une surface active de déviation concave 74a présente un bord d'attaque 76 fixé sur l'armature arrière 60, ce bord d'attaque étant donc situé au niveau d'une extrémité axiale arrière de l'ouverture d'extraction radiale 56.

La figure 5A montre que l'armature avant 70 du cadre de support 66 présente une fonction de prolongateur solide du bord de déviation 46B, puisqu'elle présente une forme profilée se situant dans la continuité aérodynamique de ce dernier. Cette zone de contournement à faible rayon de courbure, formée par l'armature avant 70, permet d'obtenir un jet de sortie de direction homogène sensiblement perpendiculaire à la section de sortie de fuite de la portion principale de déviation 74 de la membrane 32, située au niveau d'un bord de fuite 78 de celle-ci.

Par ailleurs, au niveau de ce bord de fuite 78, il est noté que la membrane 32 peut être équipée d'un renfort de tissu 106 montré sur la figure 5A, notamment pour renforcer le parallélisme de ses flancs radiaux 80.

En fonctionnement, le flux secondaire 20B transite par la veine secondaire 21B, et vient buter au moins en partie sur la membrane d'obturation déployée 58, qui force une partie 20B' de ce flux à traverser l'ouverture 56, donc à traverser l'ouverture définie intérieurement par le cadre de support 66. L'écoulement de la partie de flux 20B' à travers l'ouverture d'extraction 56 a ainsi pour conséquence de mettre en pression la surface active de déviation concave 74a, et donc de déployer la membrane de déviation 32 jusqu'à sa configuration entièrement déployée montrée sur les figures 4 et 5 et 5A.

La portion principale de déviation 74, et sa surface intérieure active de déviation concave 74a, présentent une même forme incurvée qui permet de redresser progressivement la partie de flux 20B' initialement d'orientation radiale ou sensiblement radiale en sortant de l'ouverture 56, pour aboutir à un flux de contre-poussée 20B" orienté vers l'avant, par exemple avec une composante significative parallèle à l'axe A1. Cette direction du flux de contre-poussée 20B", qui peut être adaptée en fonction des besoins rencontrés, est sensiblement parallèle à une tangente au bord de fuite 78 de la portion principale de déviation 74 et de sa surface intérieure active de déviation concave 74a. La portion principale 74 et sa surface active intérieure 74a peuvent par exemple s'étendre sous forme d'un arc de cercle ou similaire, de préférence sur une étendue angulaire comprise entre 75 et 90°.

Sur la figure 2, la membrane 32 est représentée en configuration repliée / non-déployée, telle qu'adoptée lorsque la structure mobile 29 de l'inverseur se trouve en position avancée de poussée directe. La membrane repliée 32 se trouve ainsi dans le logement 54 du capot mobile d'inverseur 33, en étant recouverte radialement par la paroi 50 de ce capot, et en étant préférentiellement agencée radialement vers l'extérieur par rapport à la membrane d'obturation 58 également non-déployée.

La membrane 32 comporte également, circonférentiellement de part et d'autre de sa portion principale de déviation 74, respectivement deux flancs radiaux 80 visibles sur la figure 5. La surface intérieure de ces deux flancs radiaux 80 délimitent conjointement, avec la surface interne active de déviation concave 74a de la portion principale 74, un canal 82 de déviation vers l'avant de la partie 20B' du flux secondaire s'échappant de l'ouverture d'extraction radiale 56, pour générer ensuite le flux de contre-poussée 20B". Avec la présence de ces flancs radiaux 80 qui longent et qui sont respectivement fixés sur les deux montants axiaux 72 du cadre de support 66, la membrane aval 32 prend une forme générale de « capuche », dont le canal 82 qu'elle délimite intérieurement est de forme coudée vers l'avant, passant d'une orientation radiale ou sensiblement radiale à une orientation axiale ou sensiblement axiale. Pour ce faire, chaque flanc axial 80 de la membrane 32 adopte une forme générale triangulaire, quasi plane, avec l'un de ses côtés arqué, suivant la forme concave de la surface active de déviation 74a.

L'une des particularités de l'invention consiste donc à prévoir la membrane déployable de déviation 32 pour dévier préférentiellement vers l'avant la partie du flux 20B' s'échappant de l'ouverture 56, lorsque cette membrane de déviation est dans la configuration déployée de la figure 4. Cependant, comme indiqué précédemment, la déviation vers l'avant du flux 20B' est une caractéristique préférentielle et non essentielle à l'invention, puisque l'inverseur peut être capable de générer un flux de sortie avec une composante axiale vers l'avant non-nulle, et/ou un flux de sortie circonférentiel avec une composante axiale nulle.

De plus, pour des performances accrues de l'inverseur et pour un plus faible dimensionnement de celui-ci, dans cette configuration déployée, la membrane aval 32 s'étend radialement vers l'extérieur au-delà du capot mobile d'inverseur 33 en position reculée d'inversion de poussée. La membrane 32 peut ainsi s'étendre au-delà de la paroi 50 du capot 33 sur une distance radiale en saillie « Drs ».

Il est noté que la section méridienne de la membrane 32 peut avantageusement être un cercle. Cette membrane présente alors une hauteur égale à la longueur axiale de la lumière formée par le cadre support 66 de la membrane en forme de capuche. Il pourra en revanche être avantageux de transformer cette forme en un secteur elliptique, plus écrasé qu'un secteur circulaire, afin de diminuer la section de passage légèrement à l'approche de la section de sortie. Il est ainsi créé un écoulement légèrement accéléré et plus stable. Préférentiellement, la membrane 32 dépasse des lignes aérodynamiques de la paroi 50 de plusieurs centimètres dans la direction radiale. Cette distance radiale en saillie « Drs » peut approximativement être de l'ordre de 50% à 90% de la hauteur radiale de veine 21B au droit de l'inverseur, par exemple dans le plan où se situe la ligne de cote de la référence « Drt » sur la figure 4, cette référence correspondant à la distance radiale totale de l'inverseur prise radialement entre l'axe A1 et le bord de fuite 78 de la portion principale de déviation 74 en configuration déployée.

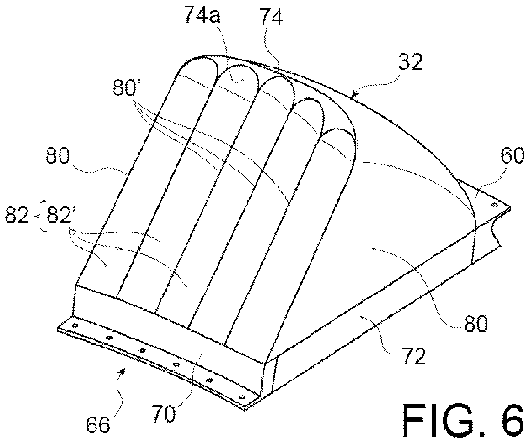

Dans le premier mode de réalisation préféré décrit ci-dessus, la membrane aval 32 définit un unique canal de déviation 82. Néanmoins, selon une alternative de réalisation montrée sur la figure 6, le canal de déviation 82 délimite, à l'aide de flancs radiaux intermédiaires 80' parallèles aux flancs radiaux 80 et situés entre ceux-ci, plusieurs compartiments de déviation 82' séparés circonférentiellement les uns des autres. Dans ce cas de figure, la portion principale de déviation 74 peut rester de forme continue selon la direction circonférentielle, ou bien se présenter sous forme de lobes successifs selon la direction circonférentielle, chaque nouveau lobe étant initié au niveau de l'extrémité radialement externe de chaque flanc radial 80, 80'. Dans cette configuration multicellulaire, chaque lobe dispose préférentiellement de son propre cadre de support longitudinal inclus dans la structure solide du support de membrane de déviation. Cette configuration multicellulaire de la figure 6 est particulièrement recommandée pour être utilisée à proximité de grilles d'aubes de déviation, ou de membranes ayant une forte déflexion latérale du jet pour assurer le pilotage du flux lors de l'inversion de poussée. Comme cela sera décrit ci-après, les compartiments de déviation 82' peuvent soit rester purement axiaux, soit permettre de dévier latéralement le flux de sortie, jusqu'à être éventuellement perpendiculaires à l'axe A1. De plus, les flancs radiaux intermédiaires 80' peuvent être supportés par des raidisseurs intermédiaires alignés avec l'orientation des compartiments qu'ils définissent.

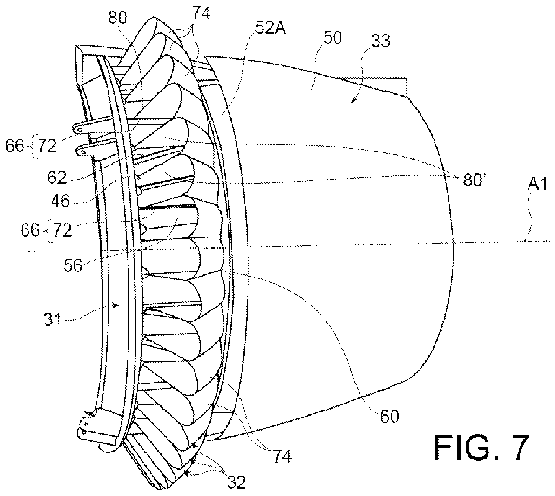

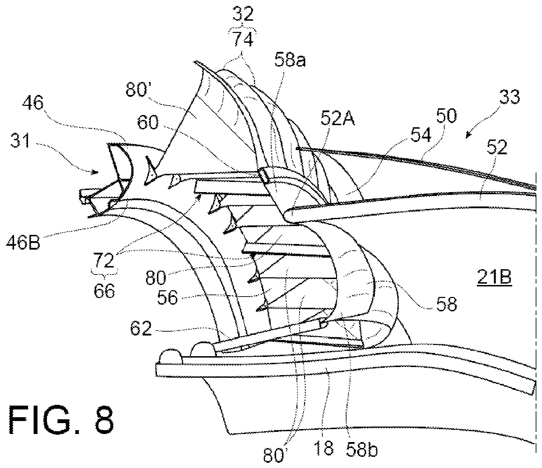

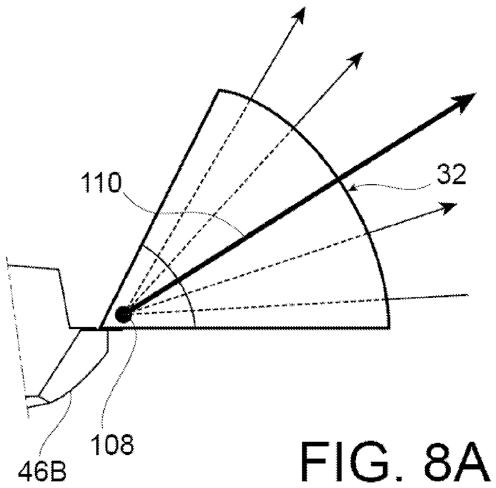

Une autre variante montrée sur les figures 7 et 8, représente une autre alternative dans laquelle les cadres de support 66 des différentes membranes aval 32 sont simplifiés. En effet, comme montré sur la figure 8A, les efforts de pression sur la membrane 32 ont un point d'application 108 très avancé, bien plus en avancé que sur une grille d'aubes habituelle. Alors que la résultante des efforts s'applique presque au milieu de la grille d'aubes, la résultante de poussée 110 d'une membrane à méridienne circulaire s'applique pratiquement sur sa partie avant, à la jonction avec le cadre avant. Ceci enlève une part importante des charges appliquées sur le cadre arrière, et le cadre de maintien de la membrane en forme de capuche ne joue plus qu'un rôle de stabilisateur. Ainsi, sous certaines conditions, l'armature avant 70 peut être supprimée, et les membranes 32 directement fixées sur le bord de déviation 46B ou sur le cadre avant 46 de la structure fixe 31. De plus, l'armature arrière 60 devient commune à tous les cadres 66, en s'étendant sur une étendue angulaire importante, pouvant par exemple être continue sur 180 à 360°.

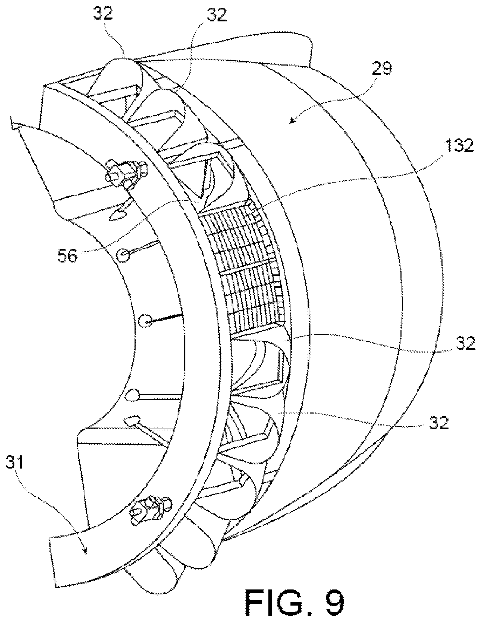

La figure 9 représente une autre alternative pour le premier mode de réalisation préféré, dans laquelle plusieurs membranes aval 32 sont réparties circonférentiellement dans l'ouverture 56. Cependant, ces membranes 32 ne sont pas seules dans l'ouverture 56, mais prévues en combinaison avec des grilles conventionnelles de déviation 132, également situées dans l'ouverture d'extraction radiale 56. Les membranes 32 et les grilles 132 peuvent être prévues en alternance, ou bien, comme montré sur la figure 9, cette alternance peut plutôt concerner des groupes de membranes successives 32 et des groupes de grilles successives 132. Cette configuration permet d'introduire des grilles à déviation oblique ou des membranes à forte déviation dans le but d'améliore le pilotage de la trajectoire des nappes de l'inverseur de poussée en fonctionnement.

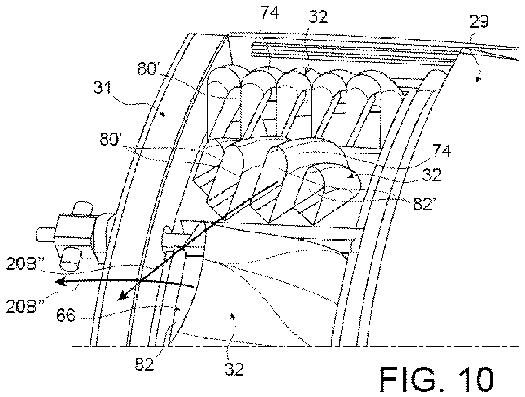

Cette configuration utilisera justement avec profit l'alternative montrée sur la figure 10, dans laquelle certaines membranes 32 peuvent générer un flux de contre-poussée 20B" avec une composante tangentielle nulle, comme cela est le cas pour la membrane 32 à canal unique 82 sur le bas de la figure 10. Pour la membrane 32 à multi-compartiments 82' montrée au milieu de la figure 10, le flux de contre-poussée 20B" généré présente une composante tangentielle non-nulle, par exemple comprise entre 30 et 60°. De même, il pourrait être prévu, en cas de besoin, une ou plusieurs membranes additionnelles 32 générant un flux de sortie avec une composante axiale nulle et dirigé tangentiellement ou essentiellement tangentiellement, comme cela est le cas pour la membrane du haut de la figure 10. Cette solution de membranes 32 à déviation à 90° et générant une poussée axiale nulle peut donc être prévue en combinaison avec d'autres membranes de déviation générant un flux de contre-poussée avec une composante axiale non-nulle. Dans ce cas de figure, toutes les membranes de déviation peuvent s'étendre radialement vers l'extérieur au-delà du capot mobile d'inverseur, ou seulement une ou certaines d'entre-elles, générant un flux de sortie à composante axiale nulle ou non-nulle.

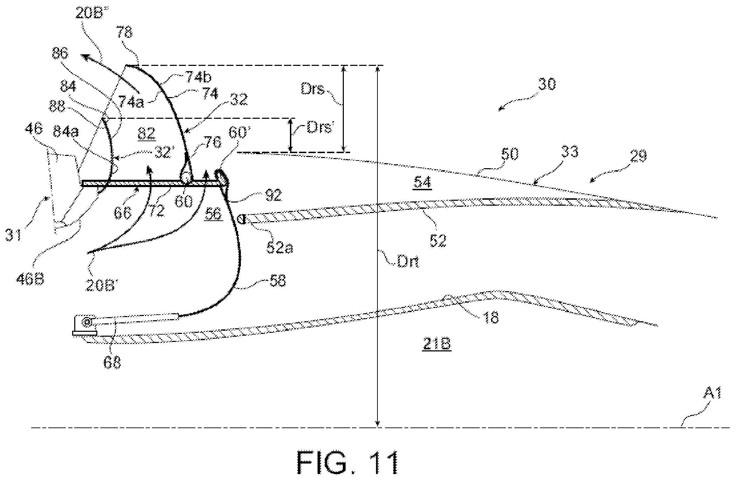

La figure 11 représente un second mode de réalisation préféré de l'invention, reprenant une grande partie des caractéristiques du premier mode, en particulier la membrane de déviation aval 32. Il y est en plus adjoint une ou plusieurs membranes de déviation amont 32', dont le but est également de redresser vers l'avant la partie de flux 20B' traversant l'ouverture 56. Tout comme pour la membrane aval 32, une seule membrane amont 32' sera décrite ci-après, étant entendu qu'elle peut présenter une étendue angulaire identique ou différente de celle de la membrane aval 32 traversée par un même plan radial et longitudinal.

Plus précisément, la membrane de déviation amont 32' comporte une portion principale de déviation 84, dont une surface active de déviation convexe 84a présente un bord d'attaque 86 fixé sur le bord de déviation rigide 46B, ce bord d'attaque étant donc situé au niveau d'une extrémité axiale avant de l'ouverture d'extraction radiale 56.

En fonctionnement, le flux secondaire 20B transite par la veine secondaire 21B, et vient buter au moins en partie sur la membrane d'obturation déployée 58, qui force la partie 20B' de ce flux à traverser l'ouverture 56, donc à traverser l'ouverture définie intérieurement par le cadre de support 66. L'écoulement de la partie de flux 20B' à travers l'ouverture d'extraction 56 a ainsi pour conséquence, en plus de celle liée au déploiement par pression de la membrane aval 32, de mettre en dépression la surface extérieure active de déviation convexe 84a, effet renforcé par l'écopage de l'écoulement externe par la membrane 84a dans sa partie externe 88. Ceci conduit à déployer la membrane de déviation amont 32' jusqu'à sa configuration entièrement déployée montrée sur la figure 11.

Le canal de déviation 82 est ainsi délimité entre les deux surfaces de déviation 74a, 84a, chacune contribuant à redresser la partie de flux 20B' vers l'avant, respectivement par effet de pression et de dépression / succion qui engendre ainsi une contre-poussée additionnelle pour le système.

La membrane amont 32' peut elle aussi comprendre des flancs radiaux (non visibles sur la figure 11) fixés sur la structure fixe 31 et rattachés en extrémité radialement extérieure à la portion principale de déviation 84, pour adopter une forme générale de « capuche » autour de laquelle la partie de flux 20B' est aspirée. Ainsi, ces flancs radiaux ne participent pas à la délimitation du canal de déviation 82, mais contribuent à la mise en forme souhaitée de la portion principale de déviation 84. Comme cela est visible sur la figure 11, la portion principale 84 et sa surface active extérieure 84a peuvent par exemple s'étendre sous forme d'un arc de cercle ou similaire, de préférence sur une étendue angulaire comprise entre 75 et 90°, et de rayon inférieur à celui de la membrane aval 32.

Des flancs radiaux intermédiaires peuvent également être prévus comme pour la membrane aval 32, sans sortir du cadre de l'invention.

Toujours dans l'optique de performances accrues de l'inverseur et pour un plus faible dimensionnement de celui-ci, dans cette configuration déployée, la membrane amont 32' s'étend radialement vers l'extérieur au-delà du capot mobile d'inverseur 33 en position reculée d'inversion de poussée. La membrane 32' peut ainsi s'étendre au-delà de la paroi 50 du capot 33 sur une distance radiale en saillie « Drs' », par exemple d'une valeur de plusieurs dizaines de centimètres. Les données exposées ci-dessus pour la distance radiale en saillie « Drs » sont également applicables pour cette distance radiale en saillie « Drs' ».

Il est noté que dans ce second mode de réalisation préféré, la membrane amont 32' en configuration non-déployée / repliée, adoptée lorsque l'inverseur est en configuration de poussée directe, est également agencée dans le logement 54 du capot mobile 33.

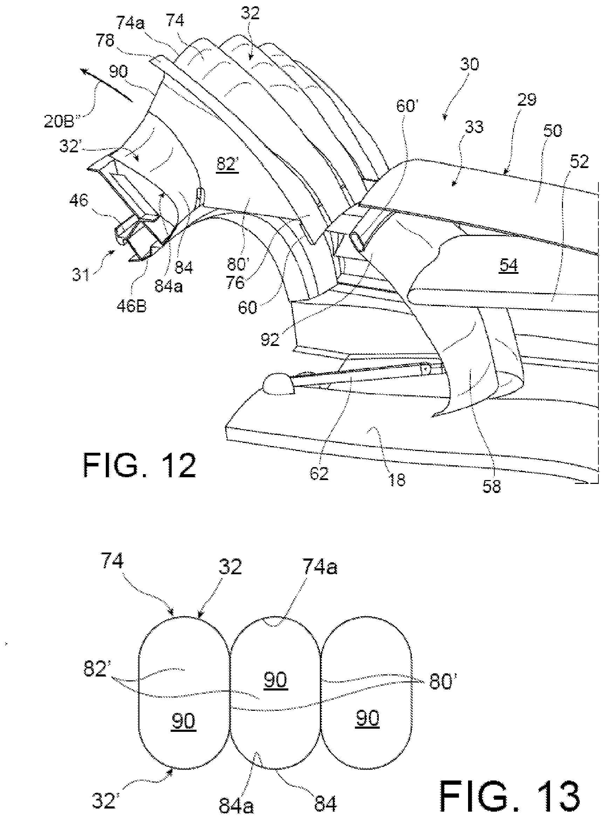

Les figures 12 et 13 montrent que la coopération entre la/les membranes aval 32, et la/les membranes amont 32', permettent à celles-ci de délimiter ensemble des cols d'extraction 90 du flux de contre-poussée 20B". Ces cols 90, de préférence de forme circulaire, oblongue ou ovale, se succèdent ainsi selon la direction circonférentielle de l'inverseur, en étant adjacents les uns aux autres.

La membrane amont 32' permet ainsi de prolonger la géométrie du bord de déviation rigide 46B de manière aérodynamique, et, en combinaison avec les membranes aval 32, de circonscrire la partie de flux 20B' sur 360° grâce aux cols 90, sans lui faire rencontrer d'obstacles susceptibles de générer des pertes de performances.

Dans ce second mode de réalisation préféré représenté sur les figures 11 à 13, une autre particularité consiste à prévoir un décalage axial entre la membrane de déviation aval 32 et la membrane d'obturation 58. Une telle conception peut bien évidemment être mise en œuvre dans le premier mode. Plus précisément, dans les configurations déployées de la membrane aval 32 et de la membrane d'obturation 58, le bord de fuite 92 de la membrane d'obturation 58 se trouve décalé axialement vers l'aval par rapport au bord d'attaque 76 de la surface active de déviation concave 74a de la membrane aval 32. Ce bord d'attaque 76 de la surface active 74a de la membrane 32 reste fixé sur l'armature arrière 60 du cadre de support 66 (ronde ou profilée aérodynamiquement en forme épaisse), tandis que le bord de fuite 92 de la membrane d'obturation 58 est fixé sur une autre armature arrière 60' plus en arrière et profilée en bord de fuite, éventuellement aussi intégrée au cadre 66. De préférence, cette armature arrière 60' est également commune à plusieurs ou à toutes les membranes d'obturation 58, en s'étendant angulairement de manière conséquente.

Le décalage axial décrit ci-dessus permet un gain encore supérieur en performances de l'inverseur, puisque la portion aval de la partie de flux 20B' va également générer une forte dépression / succion sur la surface extérieure convexe 74b de la membrane aval 32, opposée à la surface active intérieure concave 74a. Cela favorise encore davantage le redressement du flux vers l'avant.

Le second mode de réalisation préféré peut aussi être mis en œuvre avec une membrane amont 32' qui ne s'étend pas radialement vers l'extérieur au-delà du capot mobile 33, cette spécificité ne concernant alors que la membrane aval 32.

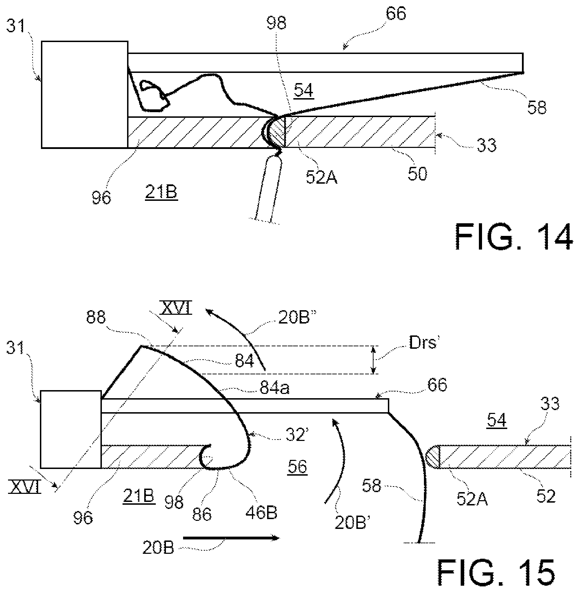

Une autre possibilité réside dans le fait de ne conserver que la/les membranes amont 32' pour redresser le flux vers l'avant, et donc de supprimer la/les membranes aval 32. Cela fait l'objet d'un troisième mode de réalisation préféré de l'invention, représenté sur les figures 14 à 16.

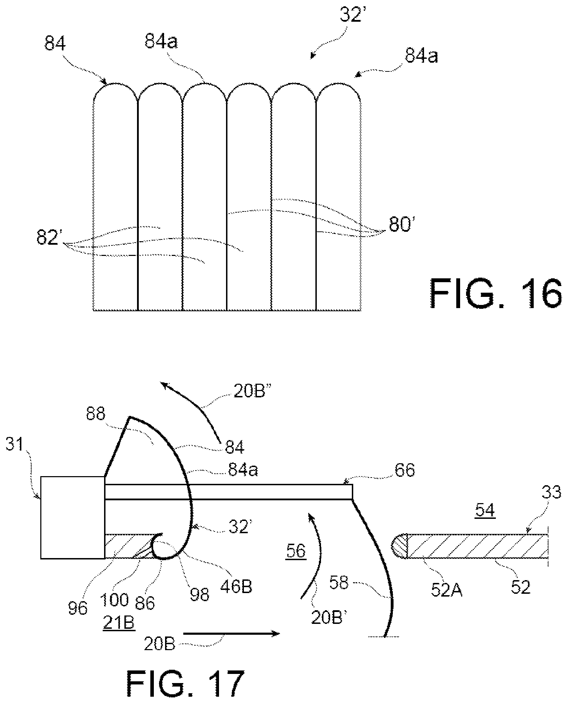

Dans ce troisième mode, la membrane aval 32' ne prolonge plus un bord de déviation rigide de la structure fixe 31, mais elle forme en plus ce bord de déviation 46B avec la partie radialement interne de la membrane 32', proche de son bord d'attaque 86 ou au niveau de celui-ci. Pour ce faire, la structure fixe 31 comporte une armature 96 sur laquelle est fixé le bord d'attaque 86 de la membrane 32', correspondant à son extrémité radialement intérieure. A l'extrémité axiale aval de cette armature plate 96, il est prévu une échancrure 98 de forme complémentaire de celle de l'extrémité amont 52A de la paroi interne 52, reçue dans cette échancrure 98 en configuration de poussée directe. En adaptant judicieusement ces deux formes pour qu'elles soient complémentaires et de géométries douces, par exemple en arc de cercle, les deux membranes 32', 58 peuvent se trouver plaquées dans cette échancrure par l'appui de l'extrémité amont 52A de la paroi 52, sans risque d'endommagement de ces membranes. L'avantage de cette configuration réside dans le fait qu'en jet direct (inverseur refermé), les deux pièces 96 et 52 s'emboîtent parfaitement et la cavité entre le panneau 52 et le bord de déviation 46B s'en trouve supprimée avec un gain significatif de performance. Lorsque la partie mobile de l'inverseur est déplacée vers l'arrière pour atteindre la configuration d'inversion de poussée, les parties pincées des membranes 32', 58 sont libérées, et elles peuvent se déployer en dehors de l'échancrure 98. Justement pour ce qui concerne le déploiement de la membrane de déviation amont 32', celle-ci s'effectue donc simplement par dépression / succion via la partie de flux 20B' qui traverse l'ouverture 56, et qui se trouve alors elle-même redressée vers l'avant par cette membrane 32'. Néanmoins, pour améliorer le déploiement de la membrane amont 32', l'armature 96 peut être percée d'une ou plusieurs ouvertures 100 débouchant d'une part dans la veine secondaire 21B, et d'autre part en regard de la surface opposée à la surface active de déviation convexe 84a, par exemple dans l'échancrure 98 comme cela a été représenté sur l'alternative de la figure 17. Cela confère une aide au déploiement de la membrane amont 32', par pression de l'air provenant de la veine secondaire 21B et transitant par les ouvertures dédiées 100. Dans cette configuration, la membrane 32' se referme sur elle-même dans sa partie supérieure de manière sensiblement étanche, et est gonflée par les ouvertures 100. Cette configuration est préférée si un faible taux de détente est utilisé en inversion de poussée, qui ne permettait pas d'avoir la dépression suffisante pour stabiliser la membrane 32' déployée.

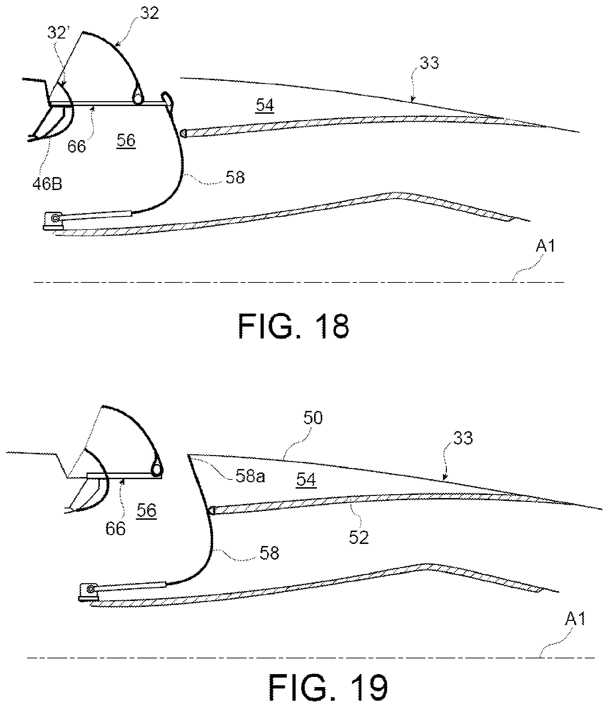

Les figures suivantes sont d'autres modes de réalisation et/ou d'autres alternatives, parmi lesquelles la figure 18 représente un quatrième mode de réalisation préféré mis en œuvre de sorte à prévoir simultanément une / plusieurs membranes de déviation aval 32, et une / plusieurs membranes de déviation amont 32' qui ne s'étendent pas nécessairement au-delà du capot mobile d'inverseur 33 dans la direction radiale vers l'extérieur. Ici, la membrane amont 32' s'étend de manière réduite radialement vers l'extérieur, mais elle forme le bord de déviation 46B avec sa partie radialement intérieure. Elle peut d'ailleurs être replacée par un bord de déviation fixe, étendu selon l'objectif de conception recherché.

Dans l'alternative représentée sur la figure 19, la membrane d'obturation 58 n'est plus solidaire du cadre de support 66 de la membrane aval 32, mais son extrémité 58a est fixée sur l'extrémité amont de la paroi externe 50 du capot mobile d'inverseur 33.

Cette configuration permet de raccourcir les lignes aérodynamiques de la nacelle, de manière optimisée sans se soucier des cadres 60 ou 60', qui constituent un point dur aérodynamique dans l'état de l'art.

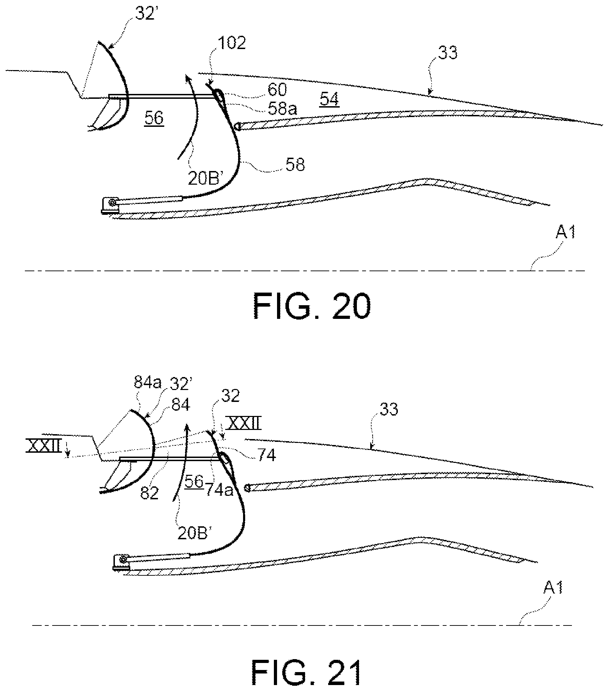

Dans le cinquième mode de réalisation préféré de la figure 20, l'inverseur est très similaire à celui du troisième mode des figures 14 à 16, à la différence que l'extrémité 58a de la membrane d'obturation 58 est prolongée au-delà de l'armature 60 par une aube rigide 102 aidant à redresser la partie de flux 20B' vers l'avant. Cette aube rigide 102 de redressement de flux est de hauteur radiale limitée, de manière à facilement s'introduire dans le logement 54 en configuration de poussée directe.

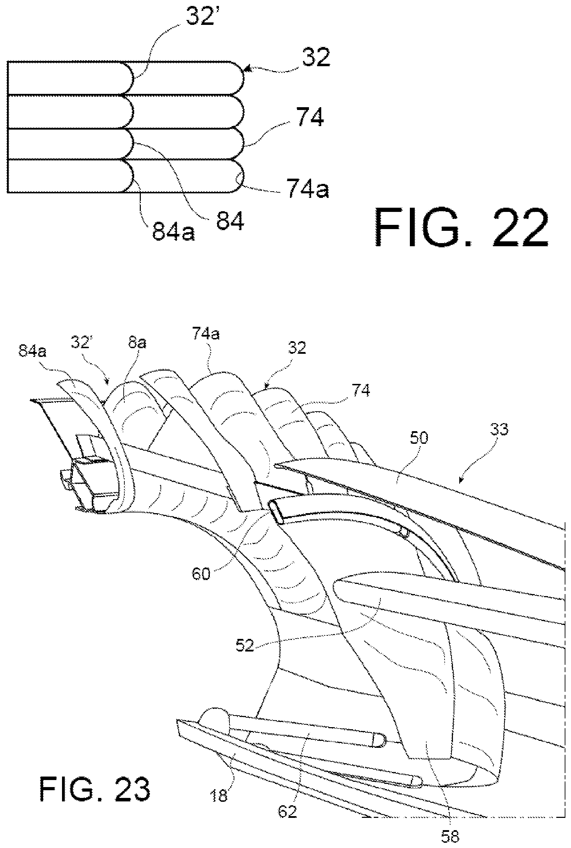

Dans le sixième mode de réalisation préféré montré sur les figures 21 à 23, l'aube rigide 102 est remplacée par une membrane aval 32 de hauteur radiale réduite, inférieure à celle de la membrane de déviation amont 32' qui s'étend elle au-delà du capot mobile 33, dans la direction radiale vers l'extérieur. D'ailleurs, dans le mode de réalisation de la figure 21, et éventuellement dans d'autres modes, la membrane de déviation 32 et la membrane d'obturation 58 sont sensiblement dans le prolongement l'une de l'autre, pour constituer un canal d'obturation et de déflexion du flux secondaire.

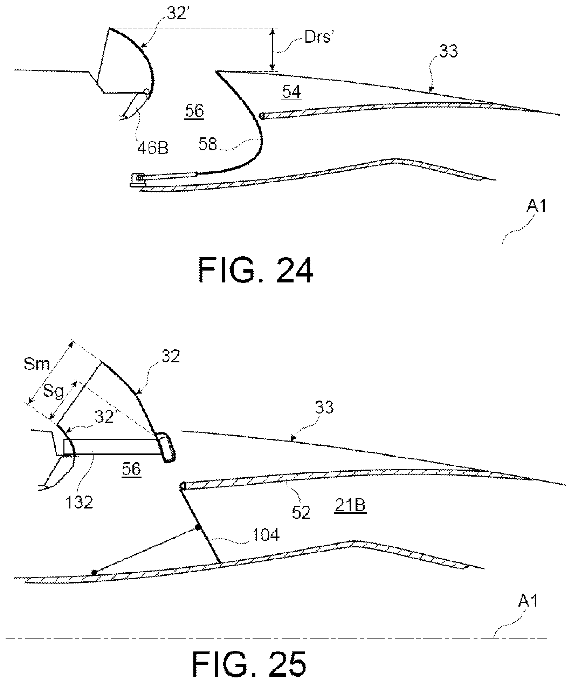

Enfin, la figure 24 représente un septième mode de réalisation préféré similaire à l'alternative de la figure 19, avec pour différences la suppression de la membrane aval 32 et l'élargissement radial vers l'extérieur de la membrane amont 32'. De même, celle-ci prolonge à nouveau le bord de déviation rigide 46B, au lieu de le former comme sur la figure 19. Dans ce septième mode de réalisation préféré, la présence du cadre de support 66 n'est plus utile, et il peut donc être supprimé pour réduire la masse globale de l'inverseur. Ce dernier mode de réalisation pourra avantageusement être combiné avec celui où la membrane amont 32' constitue une chambre gonflable associée à un bord de déviation plat 96.

La figure 25 permet la comparaison des performances entre la solution conventionnelle à grilles d'aubes 132, et la solution à membranes de déviation 32, 32' selon l'invention. En effet, il est montré sur cette figure que pour un même encombrement axial, la section débitante « Sm » produite à la sortie des membranes 32, 32' est largement supérieure à la section débitante « Sg » produite par les grilles d'aubes de déviation 132.

Sur cette figure 25, il a par ailleurs été montré que l'obturation de la veine secondaire 21B peut être effectuée par des volets d'obturation conventionnels 104, sans sortir du cadre de l'invention. Diverses modifications peuvent être apportées par l'homme du métier à l'invention qui vient d'être décrite, uniquement à titre d'exemples non limitatifs, et dont la portée est définie par les revendications annexées. Par exemple, l'inverseur de poussée 30 peut alternativement présenter une architecture en « C » ou en « O ». De plus, toutes les caractéristiques divulguées ci-dessus, dans les différents modes de réalisation préférés et leurs alternatives, sont combinables entre elles. D'ailleurs, il est noté que sur toutes les figures qui ont été décrites ci-dessus, les éléments qui portent les mêmes références numériques correspondent à des éléments identiques ou similaires.

## Revendications

1. Inverseur de poussée (30) pour ensemble propulsif d'aéronef, l'inverseur comprenant une structure fixe (31) équipée d'une paroi de délimitation radialement interne (18) d'une veine secondaire (21B) de l'ensemble propulsif destinée à être traversée par un flux secondaire (20B), l'inverseur comprenant également une structure mobile (29) comprenant au moins un capot mobile d'inverseur (33) équipé d'une paroi radialement interne de capot d'inverseur (52) délimitant la veine secondaire (21B) radialement vers l'extérieur, la structure mobile étant déplaçable en translation par rapport à la structure fixe selon un axe central longitudinal (A1) de l'inverseur, entre une position avancée de poussée directe, et une position reculée d'inversion de poussée dans laquelle la structure mobile (29) et la structure fixe (31) définissent axialement entre elles, sur la veine secondaire, une ouverture d'extraction radiale (56) d'au moins une partie (20B') du flux secondaire,
**caractérisé en ce que** l'inverseur de poussée comprend également au moins une membrane déployable de déviation (32, 32') conçue pour dévier au moins une partie (20B') du flux secondaire s'échappant de l'ouverture d'extraction radiale (56), lorsque cette membrane de déviation est dans une configuration déployée adoptée lorsque la structure mobile (29) se trouve en position reculée d'inversion de poussée,
et **en ce que** dans cette configuration déployée, ladite au moins une membrane de déviation (32, 32') s'étend radialement vers l'extérieur au-delà du capot mobile d'inverseur (33) en position reculée d'inversion de poussée.

2. Inverseur de poussée selon la revendication 1, **caractérisé en ce que** ladite au moins une membrane de déviation comporte une membrane de déviation aval (32) dont une surface active de déviation concave (74a) présente un bord d'attaque (76) situé préférentiellement au niveau d'une extrémité axiale arrière de l'ouverture d'extraction radiale (56), ladite surface active de déviation concave (74a) étant mise en pression par ladite au moins une partie (20b') du flux secondaire s'échappant de l'ouverture d'extraction radiale (56).

3. Inverseur de poussée selon la revendication 1 ou la revendication 2, **caractérisé en ce que** ladite au moins une membrane de déviation comporte une membrane de déviation amont (32') dont une surface active de déviation convexe (84a) présente un bord d'attaque (86) situé préférentiellement au niveau d'une extrémité axiale avant de l'ouverture d'extraction radiale (56), ladite surface active de déviation convexe (84a) étant mise en dépression par ladite au moins une partie (20B') du flux secondaire s'échappant de l'ouverture d'extraction radiale (56).

4. Inverseur de poussée selon la revendication 2 ou la revendication 3 combinée à la revendication 2, **caractérisé en ce que** ladite membrane de déviation aval (32) comporte, circonférentiellement de part et d'autre de sa surface active de déviation concave (74a), respectivement deux flancs radiaux (80) délimitant conjointement, avec la surface active de déviation concave (74a), un canal (82) de déviation vers l'avant de ladite au moins une partie (20B') du flux secondaire s'échappant de l'ouverture d'extraction radiale (56).

5. Inverseur de poussée selon la revendication 4, **caractérisé en ce que** ledit canal de déviation (82) délimite, à l'aide de flancs radiaux intermédiaires (80'), plusieurs compartiments de déviation (82') séparés circonférentiellement les uns des autres.

6. Inverseur de poussée selon la revendication 4 ou la revendication 5, **caractérisé en ce que** ladite membrane de déviation aval (32) est fixée sur un cadre de support (66), de préférence de forme générale carrée ou rectangulaire, agencée dans l'ouverture d'extraction radiale (56).

7. Inverseur de poussée selon l'une quelconque des revendications précédentes, **caractérisé en ce que** plusieurs membranes de déviation (32, 32') se succèdent circonférentiellement dans l'ouverture d'extraction radiale (56), éventuellement en combinaison avec des grilles de déviation (132) également situées dans l'ouverture d'extraction radiale (56), entre les membranes de déviation (32, 32').

8. Inverseur de poussée selon l'une quelconque des revendications précédentes combinée à la revendication 3, **caractérisé en ce que** la membrane de déviation amont (32'), dans sa configuration déployée, prolonge un bord de déviation rigide (46B) de la structure fixe (31), ou forme ce même bord de déviation (46B).

9. Inverseur de poussée selon l'une quelconque des revendications précédentes, **caractérisé en ce qu'**il comprend également au moins une membrane déployable d'obturation (58) qui, dans une configuration déployée dans la veine secondaire (21B), est conçue pour dévier au moins une partie du flux secondaire (21B) vers l'ouverture d'extraction radiale (56) lorsque la structure mobile (29) se trouve en position reculée d'inversion de poussée.

10. Inverseur de poussée selon l'une quelconque des revendications précédentes combinée à la revendication 2, **caractérisé en ce que** dans les configurations déployées de la membrane de déviation aval (32) et de la membrane d'obturation (58), un bord de fuite (92) de la membrane d'obturation (58) se trouve décalé axialement vers l'aval par rapport au bord d'attaque (76) de la surface active de déviation concave (74a) de la membrane de déviation aval (32).

11. Inverseur de poussée selon l'une quelconque des revendications précédentes combinée à la revendication 2 ou 3, **caractérisé en ce qu'**il comprend une ou plusieurs membranes de déviation aval (32) ainsi qu'une ou plusieurs membranes de déviation amont (32'), délimitant ensemble un ou plusieurs cols (90) d'extraction d'un flux de contre-poussée (20B").

12. Inverseur de poussée selon l'une quelconque des revendications précédentes, **caractérisée en ce que** ladite au moins une membrane de déviation (32, 32') est montée sur la structure fixe (31) de l'inverseur.

13. Nacelle (3) pour ensemble propulsif d'aéronef, comprenant au moins un capot de soufflante (14), ainsi qu'un inverseur de poussée (30) selon l'une quelconque des revendications précédentes.

14. Ensemble propulsif (1) pour aéronef, comprenant une turbomachine (2) et une nacelle (3) selon la revendication précédente.

## Patentansprüche

1. Schubumrichter (30) für eine Flugzeugantriebseinheit, wobei der Umrichter eine feste Struktur (31) umfasst, die mit einer radial innenliegenden Begrenzungswand (18) einer Sekundärleitung (21B) der Antriebseinheit ausgestattet ist, die von einem Sekundärstrom (20B) durchquert werden soll, wobei der Umrichter auch eine bewegliche Struktur (29) umfasst, die mindestens eine bewegliche Umrichterhaube (33) umfasst, die mit einer radial innenliegenden Umrichterhaubenwand (52) ausgestattet ist, die die Sekundärleitung (21B) radial nach außen begrenzt, wobei die bewegliche Struktur in Translation in Bezug auf die feste Struktur entlang einer Längsmittelachse (A1) des Umrichters zwischen einer vorgeschobenen Position für den direkten Schub und einer zurückgezogenen Position für die Schubumkehr beweglich ist, wobei die bewegliche Struktur (29) und die feste Struktur (31) axial zueinander auf der Sekundärleitung eine radiale Extraktionsöffnung (56) für mindestens einen Teil (20B') des Sekundärstroms definieren,
**dadurch gekennzeichnet, dass** der Schubumrichter auch mindestens eine ausfahrbare Umlenkmembran (32, 32') umfasst, die ausgebildet ist, um mindestens einen Teil (20B') des aus der radialen Extraktionsöffnung (56) austretenden Sekundärstroms umzulenken, wenn sich diese Umlenkmembran in einer ausgefahrenen Konfiguration befindet, die eingenommen wird, wenn sich die bewegliche Struktur (29) in der zurückgezogenen Position für die Schubumkehr befindet,
und dass sich in dieser ausgefahrenen Konfiguration die mindestens eine Umlenkmembran (32, 32') in der zurückgezogenen Position für die Schubumkehr radial nach außen über die bewegliche Umlenkhaube (33) hinaus erstreckt.

2. Schubumrichter nach Anspruch 1, **dadurch gekennzeichnet, dass** die mindestens eine Umlenkmembran eine nachgelagerte Umlenkmembran (32) aufweist, deren aktive konkave Umlenkfläche (74a) eine Vorderkante (76) aufweist, die sich vorzugsweise an einem hinteren axialen Ende der radialen Extraktionsöffnung (56) befindet, wobei die aktive konkave Umlenkfläche (74a) durch den mindestens einen Teil (20b') des aus der radialen Extraktionsöffnung (56) austretenden Sekundärstroms unter Druck gesetzt wird.

3. Schubumrichter nach Anspruch 1 oder Anspruch 2, **dadurch gekennzeichnet, dass** die mindestens eine Umlenkmembran eine vorgelagerte Umlenkmembran (32') aufweist, deren aktive konvexe Umlenkfläche (84a) eine Vorderkante (86) aufweist, die sich vorzugsweise an einem vorderen axialen Ende der radialen Extraktionsöffnung (56) befindet, wobei die aktive konvexe Umlenkfläche (84a) durch den mindestens einen Teil (20B') des aus der radialen Extraktionsöffnung (56) austretenden Sekundärstroms unter Druck gesetzt wird.

4. Schubumrichter nach Anspruch 2 oder Anspruch 3 in Kombination mit Anspruch 2, **dadurch gekennzeichnet, dass** die nachgelagerte Umlenkmembran (32) in Umfangsrichtung auf beiden Seiten ihrer aktiven konkaven Umlenkfläche (74a) jeweils zwei radiale Flanken (80) umfasst, die gemeinsam mit der aktiven konkaven Umlenkfläche (74a) einen Kanal (82) zur Vorwärtsumlenkung des mindestens einen Teils (20B') des aus der radialen Extraktionsöffnung (56) austretenden Sekundärstroms begrenzen.

5. Schubumrichter nach Anspruch 4, **dadurch gekennzeichnet, dass** der Umlenkkanal (82) mithilfe von dazwischenliegenden radialen Flanken (80') mehrere in Umfangsrichtung voneinander getrennte Umlenkkammern (82') begrenzt.

6. Schubumrichter nach Anspruch 4 oder Anspruch 5, **dadurch gekennzeichnet, dass** die nachgelagerte Umlenkmembran (32) an einem Trägerrahmen (66) befestigt ist, der vorzugsweise eine allgemein quadratische oder rechteckige Form hat und in der radialen Extraktionsöffnung (56) angeordnet ist.

7. Schubumrichter nach einem der vorhergehenden Ansprüche, **dadurch gekennzeichnet, dass** mehrere Umlenkmembranen (32, 32') in der radialen Extraktionsöffnung (56), gegebenenfalls in Kombination mit Umlenkgittern (132), die sich ebenfalls in der radialen Extraktionsöffnung (56) befinden, zwischen den Umlenkmembranen (32, 32') im Umfangsrichtung aufeinanderfolgend angeordnet sind.

8. Schubumrichter nach einem der vorhergehenden Ansprüche in Kombination mit Anspruch 3, **dadurch gekennzeichnet, dass** die vorgelagerte Umlenkmembran (32') in ihrer ausgefahrenen Konfiguration eine starre Umlenkkante (46B) der festen Struktur (31) verlängert oder dieselbe Umlenkkante (46B) bildet.

9. Schubumrichter nach einem der vorhergehenden Ansprüche, **dadurch gekennzeichnet, dass** er auch mindestens eine ausfahrbare Verschlussmembran (58) umfasst, die in einer in der Sekundärleitung (21B) ausgefahrenen Konfiguration ausgebildet ist, um mindestens einen Teil des Sekundärstroms (21B) in Richtung der radialen Extraktionsöffnung (56) umzulenken, wenn sich die bewegliche Struktur (29) in der zurückgezogenen Position für die Schubumkehr befindet.

10. Schubumrichter nach einem der vorhergehenden Ansprüche in Kombination mit Anspruch 2, **dadurch gekennzeichnet, dass** in den ausgefahrenen Konfigurationen der nachgelagerten Umlenkmembran (32) und der Verschlussmembran (58) eine Hinterkante (92) der Verschlussmembran (58) axial stromabwärts gegenüber der Vorderkante (76) der konkaven aktiven Umlenkfläche (74a) der nachgelagerten Umlenkmembran (32) versetzt ist.

11. Schubumrichter nach einem der vorhergehenden Ansprüche in Kombination mit Anspruch 2 oder 3, **dadurch gekennzeichnet, dass** er eine oder mehrere nachgelagerte Umlenkmembranen (32) sowie eine oder mehrere vorgelagerte Umlenkmembranen (32') umfasst, die zusammen einen oder mehrere Durchlässe (90) zur Extraktion eines Gegendruckstroms (20B) begrenzen.

12. Schubumrichter nach einem der vorhergehenden Ansprüche, **dadurch gekennzeichnet, dass** die mindestens eine Umlenkmembran (32, 32') an der festen Struktur (31) des Umrichters montiert ist.

13. Gondel (3) für eine Flugzeugantriebseinheit, umfassend mindestens eine Gebläsehaube (14) sowie einen Schubumrichter (30) nach einem der vorhergehenden Ansprüche.

14. Flugzeugantriebseinheit (1), umfassend eine Turbomaschine (2) und eine Gondel (3) nach dem vorhergehenden Anspruch.

## Claims

1. Thrust reverser (30) for an aircraft propulsion unit, the reverser comprising a fixed structure (31) equipped with a wall (18) for the radially internal delimitation of a secondary flow duct (21B) of the propulsion unit intended to have a secondary flow (20B) pass through it, the reverser also comprising a movable structure (29) comprising at least one movable reverser cowl (33) equipped with a radially internal reverser cowl wall (52) delimiting the secondary flow duct (21B) radially outwards, the movable structure being movable in translation with respect to the fixed structure on a longitudinal central axis (A1) of the reverser, between an advanced direct-thrust position and a retracted thrust-reversal position in which the movable structure (29) and the fixed structure (31) define axially between them, on the secondary flow duct, an opening (56) for radial extraction of at least part (20B') of the secondary flow,
**characterised in that** the thrust reverser also comprises at least one deployable deflecting membrane (32, 32') designed to deflect at least part (20B') of the secondary flow escaping from the radial extraction opening (56), when this deflecting membrane is in a deployed configuration adopted when the movable structure (29) is in the retracted thrust-reversal position,
and **in that**, in this deployed configuration said at least one deflecting membrane (32, 32') extends radially outwards beyond the movable reverser cowl (33) in the retracted thrust-reversal position.

2. Thrust reverser according to claim 1, **characterised in that** said at least one deflecting membrane includes a downstream deflecting membrane (32) a concave deflecting active surface (74a) of which has a leading edge (76) preferably located at a rear axial end of the radial extraction opening (56), said concave active deflecting surface (74a) being pressurised by said at least part (20b') of the secondary flow escaping from the radial extraction opening (56).

3. Thrust reverser according to claim 1 or claim 2, **characterised in that** said at least one deflecting membrane includes an upstream deflecting membrane (32') a convex deflecting active surface 84a) of which has a leading edge (86) preferentially located at a front axial end of the radial extraction opening (56), said convex active deflecting surface (84a) being put under negative pressure by said at least part (20B') of the secondary flow escaping from the radial extraction opening (56).

4. Thrust reverser according to claim 2 or claim 3 combined with claim 2, **characterised in that** said downstream deflecting membrane (32) includes, circumferentially on either side of its active concave deflecting surface (74a), respectively two radial flanks (80) conjointly delimiting, with the active concave deflecting surface (74a), a channel (82) deflecting forwards said at least part (20B') of the secondary flow escaping from the radial extraction opening (56).

5. Thrust reverser according to claim 4, **characterised in that** said deflecting channel (82) delimits, by means of intermediate radial flanks (80'), a plurality of deflection compartments (82') circumferentially separated from each other.

6. Thrust reverser according to claim 4 or claim 5, **characterised in that** said downstream deflection membrane (32) is secured to a support frame (66), preferably with an overall square or rectangular shape, arranged in the radial extraction opening (56).

7. Thrust reverser according to any one of the preceding claims, **characterised in that** a plurality of deflection membranes (32, 32') follow each other circumferentially in the radial extraction opening (56), optionally in combination with cascade vanes (132) also located in the radial extraction opening (56), between the deflection membranes (32, 32').

8. Thrust reverser according to any one of the preceding claims combined with claim 3, **characterised in that** the upstream deflection membrane (32'), in its deployed configuration, extends a rigid deflection edge (46B) of the fixed structure (31), or forms this same deflection edge (46B).

9. Thrust reverser according to any one of the preceding claims, **characterised in that** it also comprises at least one deployable sealing membrane (58) which, in a configuration deployed in the secondary flow duct (21B), is designed to deflect at least part of the secondary flow (21B) towards the radial extraction opening (56) when the movable structure (29) is in the retracted thrust-reversal position.

10. Thrust reverser according to any one of the preceding claims combined with claim 2, **characterised in that**, in the deployed configurations of the downstream deflection membrane (32) and of the sealing membrane (58), a trailing edge (92) of the sealing membrane (58) is offset axially downstream with respect to the leading edge (76) of the active concave diversion surface (74a) of the downstream membrane (32).

11. Thrust reverser according to any one of the preceding claims combined with claim 2 or 3, **characterised in that** it comprises one or more downstream deflection membranes (32) as well as one or more upstream deflection membranes (32'), delimiting together one or more necks (90) for extracting a counter-thrust flow (20B').

12. Thrust reverser according to any one of the preceding claims, **characterised in that** said at least one deflection membrane (32, 32') is mounted on the fixed structure (31) of the reverser.

13. Nacelle (3) for an aircraft propulsion unit, comprising at least one fan cowl (14), as well as a thrust reverser (30) according to any one of the preceding claims.

14. Propulsion unit (1) for an aircraft, comprising a turbine engine (2) and a nacelle (3) according to the preceding claim.
